# EUROPÄISCHE PATENTANMELDUNG

(11) **EP 0 969 649 A1**
(43) Veröffentlichungstag der Anmeldung: **05.01.2000**
(21) Anmeldenummer: 99112379.5
(22) Anmeldetag: 29.06.1999
(51) Int. Cl.: H04M 3/54

(54) **Verfahren zur Rufweitergabe in Kommunikationsnetzen**

(30) Priorität: 03.07.1998 DE 19829748
(71) Anmelder: ROBERT BOSCH GMBH, 70442 Stuttgart (DE)
(72) Erfinder: Steuer, Manfred, 65719 Hofheim (DE)

(57) **Zusammenfassung**

Es wird ein Verfahren zur Rufweitergabe in Kommunikationsnetzen beschrieben, bei dem ein Ruf von einer rufenden Teilnehmerstelle (A) an eine gerufene Teilnehmerstelle (B) abgegeben wird, und bei dem der Ruf an eine weitere Teilnehmerstelle (C) weitergegeben wird. Die rufende und die gerufene Teilnehmerstelle (A, B) sind an ein erstes Kommunikationsnetz (1) und die weitere Teilnehmerstelle ist (C) an ein zweites Kommunikationsnetz (2) angeschlossen. Die Teilnehmerstellen (A, B, C) sind mit Adressen versehen. Die Adresse der weiteren Teilnehmerstelle (C) und die Adresse der gerufenen Teilnehmerstelle (B) werden an das erste Kommunikationsnetz (1) übermittelt und dort abgespeichert (4).

## Beschreibung

### Stand der Technik

Die Erfindung betrifft ein Verfahren zur Rufweitergabe in Kommunikationsnetzen, bei dem ein Ruf von einer rufenden Teilnehmerstelle an eine gerufene Teilnehmerstelle abgegeben wird, und bei dem der Ruf an eine weitere Teilnehmerstelle weitergegeben wird, wobei die rufende und die gerufene Teilnehmerstelle an ein erstes Kommunikationsnetz und die weitere Teilnehmerstelle an ein zweites Kommunikationsnetz angeschlossen sind, und wobei die Teilnehmerstellen mit Adressen versehen sind.

Ein derartiges Verfahren für eine Rufweitergabe ist beispielsweise aus der derzeitigen ISDN-Technik bekannt. Dort ist es möglich, an einer Teilnehmerstelle eine Rufweitergabe dadurch einzurichten, daß der Teilnehmerstelle das Ziel der Rufweitergabe z.B. per Tasteneingabe mitgeteilt wird. Die Teilnehmerstelle, bei der die Rufweitergabe erfolgen soll, ist dann die gerufene Teilnehmerstelle, und die als Ziel angegebene Teilnehmerstelle ist dann die weitere Teilnehmerstelle. Wird nun die mit der Rufweitergabe versehene Teilnehmerstelle von einer rufenden Teilnehmerstelle angerufen, so fragt die gerufene Teilnehmerstelle die Adresse der rufenden Teilnehmerstelle ab. Danach baut die gerufene Teilnehmerstelle eine weitere Verbindung zu der weiteren Teilnehmerstelle auf. Dort wird der ankommende Ruf als Rufweitergabe gekennzeichnet, so daß z.B. der den Ruf entgegennehmende Benutzer weiß, daß die Kosten für die Rufweitergabe von der gerufenen Teilnehmerstelle zu der weiteren Teilnehmerstelle zu seinen Lasten gehen.

Der Nachteil dieser bekannten Rufweitergabe besteht insbesondere in dem Aufwand, daß die gerufene Teilnehmerstelle die weitere Verbindung zu der weiteren Teilnehmerstelle aufbauen muß, und daß damit diese gerufene Teilnehmerstelle insoweit belegt ist.

Aufgabe der Erfindung ist es, ein Verfahren zur Rufweitergabe in Kommunikationsnetzen zu schaffen, das einfach durchführbar ist, und das die gerufene Teilnehmerstelle nicht oder nur unwesentlich belegt.

Diese Aufgabe wird bei einem Verfahren der eingangs genannten Art erfindungsgemäß dadurch gelöst, daß die Adresse der weiteren Teilnehmerstelle und die Adresse der gerufenen Teilnehmerstelle an das erste Kommunikationsnetz übermittelt und dort abgespeichert werden.

Damit ist in dem ersten Kommunikationsnetz bekannt, daß bei der gerufenen Teilnehmerstelle eine Rufweitergabe erwünscht ist. Wird diese Teilnehmerstelle gerufen, so kann von dem ersten Kommunikationsnetz eine Rufweitergabe durchgeführt werden, ohne daß hierzu die an sich gerufene Teilnehmerstelle in irgend einer Weise beaufschlagt werden muß. Insbesondere wird die an sich gerufene Teilnehmerstelle nicht belegt.

Die Übermittlung der genannten Adressen an das erste Kommunikationsnetz kann dabei von dem zweiten Kommunikationsnetz aus oder auch innerhalb des ersten Kommunikationsnetzes erfolgen. Damit wird eine möglichst weitgehende Flexibilität des erfindungsgemäßen Verfahrens erreicht.

Bei einer vorteilhaften Weiterbildung der Erfindung werden die Adresse der weiteren Teilnehmerstelle und die Adresse der gerufenen Teilnehmerstelle von einer beliebigen Teilnehmerstelle des zweiten Kommunikationsnetzes an das erste Kommunikationsnetz übermittelt und dort abgespeichert.

Es ist also nicht erforderlich, daß die Übermittlung der genannten Adressen von einer bestimmten Teilnehmerstelle erfolgt, sondern es ist möglich, daß diese Übermittlung von jeder beliebigen Teilnehmerstelle des zweiten Kommunikationsnetzes erfolgen kann. Dies erhöht die Flexibilität und Benutzerfreundlichkeit des erfindungsgemäßen Verfahrens.

Bei einer vorteilhaften Ausgestaltung der Erfindung wird bei der Abgabe eines Rufs der rufenden Teilnehmerstelle an die gerufene Teilnehmerstelle von dem ersten Kommunikationsnetz anhand der von dem zweiten Kommunikationsnetz übermittelten Adresse der gerufenen Teilnehmerstelle eine erwünschte Rufweitergabe erkannt.

Findet in dem ersten Kommunikationsnetz ein Ruf statt, so prüft dasselbe, ob bei der gerufenen Teilnehmerstelle eine Rufweitergabe eingerichtet ist. Dies kann das erste Kommunikationsnetz anhand der abgespeicherten Informationen ohne weiteres erkennen. Das erfindungsgemäße Verfahren ermöglicht damit auf eine einfache und schnelle Art und Weise eine Rufweitergabe an eine weitere Teilnehmerstelle.

Bei einer ersten vorteilhaften Ausführung der Erfindung wird von dem ersten Kommunikationsnetz anhand der von dem zweiten Kommunikationsnetz übermittelten Adresse der weiteren Teilnehmerstelle eine Verbindung der rufenden Teilnehmerstelle zu der weiteren Teilnehmerstelle aufgebaut.

Dies bedeutet, daß das erste Komunikationsnetz die Rufweitergabe ausführt. Es wird also der ursprünglich bei dem ersten Kommunikationsnetz eingegangene Ruf von der rufenden Teilnehmerstelle an die erwünschte weitere Teilnehmerstelle weiterverbunden. Insgesamt setzt sich somit die gesamte Verbindung aus der ursprünglichen Verbindung und einer weiteren, zusätzlichen Verbindung zusammen. Dies stellt eine schnelle Möglichkeit dar, die Rufweitergabe zu realisieren.

Bei einer zweiten vorteilhaften Ausführung der Erfindung wird bei der Abgabe eines Rufs der rufenden Teilnehmerstelle an die gerufene Teilnehmerstelle der rufenden Teilnehmerstelle die Adresse der weiteren Teilnehmerstelle mitgeteilt, und es wird von der rufenden Teilnehmerstelle eine Verbindung zu der weiteren Teilnehmerstelle aufgebaut.

Dies bedeutet, daß die rufende Stelle eine vollkommen neue Verbindung von sich selbst zu der weiteren Teilnehmerstelle aufbaut. Insoweit wird die Rufweitergabe durch keine zusätzliche Verbindung wie bei der ersten Ausführung der Erfindung erreicht, sondern durch den Aufbau einer gesamten, neuen Verbindung von der rufenden Teilnehmerstelle zu der weiteren Teilnehmerstelle.

Dabei ist es vorteilhaft, wenn der Ruf der rufenden Teilnehmerstelle an die gerufene Teilnehmerstelle unterbrochen wird, und wenn ein neuer Ruf der rufenden Teilnehmerstelle an die weitere Teilnehmerstelle aufgebaut wird. Damit wird eine Belegung der an sich gerufenen Teilnehmerstelle vermieden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines ersten Ausführungsbeispiels eines erfindungsgemäßen Verfahrens, und
- Figur 2: zeigt ein schematisches Blockschaltbild eines zweiten Ausführungsbeispiels eines erfindungsgemäßen Verfahrens.

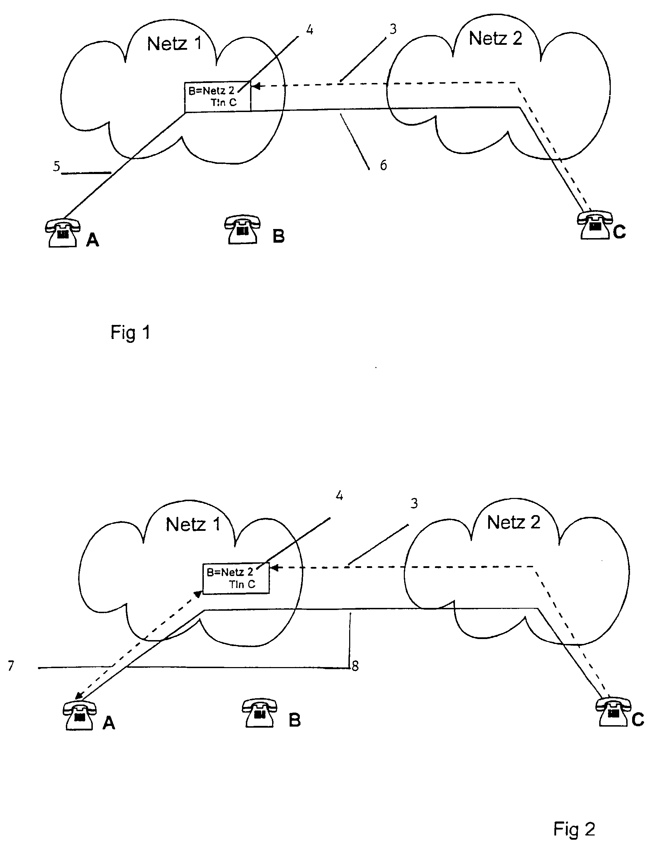

In der Figur 1 ist ein erstes Kommunikationsnetz 1 und ein zweites Kommunikationsnetz 2 dargestellt. Bei den beiden Kommunikationsnetzen 1 und 2 kann es sich um öffentliche und/oder private Netze und/oder um Nebenstellenanlagen oder dergleichen handeln, die in Analogtechnik und/oder in Digitaltechnik aufgebaut sein können.

An das erste Kommunikationsnetz 1 sind eine Teilnehmerstelle A und eine Teilnehmerstelle B angeschlossen. An das zweite Kommunikationsnetz 2 ist eine Teilnehmerstelle C angeschlossen. Es versteht sich, daß an die beiden Kommunikationsnetze 1 und 2 jeweils eine Mehrzahl weiterer Teilnehmerstellen angeschlossen sein können. Bei den Teilnehmerstellen A, B, C kann es sich um Telefonapparate handeln, die von einem Benutzer bedient werden können. Ebenfalls kann es sich bei den Teilnehmerstellen A, B, C um z.B. über Modems angeschlossene Computer handeln, die automatisch eine Bedienung ausführen können.

Jede der Teilnehmerstellen A, B, C besitzt eine Adresse, die eine eindeutige Kennzeichnung der jeweiligen Teilnehmerstelle A, B, C innerhalb des zugehörigen Kommunikationsnetzes 1, 2 sowie eine eindeutige Kennzeichnung des jeweils zugehörigen Kommunikationsnetzes 1, 2 ermöglicht.

Bei dem Verfahren der Figur 1 ist eine Rufweitergabe eines von einer rufenden Teilnehmerstelle abgegebenen Rufs an ein anderes Kommunikationsnetz möglich. Bei der Rufweitergabe kann es sich um eine Rufumleitung handeln, bei der ein bei einer gerufenen Teilnehmerstelle eingehender Ruf sofort an eine weitere Teilnehmerstelle weitergegeben wird. Ebenfalls kann es sich bei der Rufweitergabe um eine Rufweiterleitung handeln, bei der ein bei einer gerufenen Teilnehmerstelle eingehender Ruf erst nach z.B. dreimaligem erfolglosem Läuten an eine weitere Teilnehmerstelle weitergegeben wird.

Nachfolgend stellt die Teilnehmerstelle A die rufende Teilnehmerstelle dar, von der ein Ruf an die Teilnehmerstelle B abgegeben wird. Die Teilnehmerstelle B stellt somit die gerufene Teilnehmerstelle dar. Der Benutzer der Teilnehmerstelle B wünscht eine Rufweitergabe an die Teilnehmerstelle C, die somit die weitere Teilnehmerstelle darstellt. Dies bedeutet gleichzeitig eine Rufweitergabe von dem ersten Kommunikationsnetz 1 an das zweite Kommunikationsnetz 2.

Der Benutzer der Teilnehmerstelle B, der sich beispielsweise vorübergehend im Bereich des zweiten Kommunikationsnetzes 2 befindet, richtet die erwünschte Rufweitergabe wie folgt ein. An der Teilnehmerstelle C oder an jeder beliebigen anderen Teilnehmerstelle des zweiten Kommunikationsnetzes 2 meldet sich der Benutzer bei dem zweiten Kommunikationsnetz 2, insbesondere bei einer Vermittlungsstelle des zweiten Kommunikationsnetzes 2, an und gibt die Adresse seiner Teilnehmerstelle B, bei der die Rufweitergabe erfolgen soll, sowie die Adresse der Teilnehmerstelle C, an die die Rufweitergabe erfolgen soll, an. Daraufhin meldet sich das zweite Kommunikationsnetz 2 bei dem ersten Kommunikationsnetz 1, insbesondere bei einer Vermittlungsstelle des ersten Kommunikationsnetzes 1, und übermittelt die Adresse der Teilnehmerstelle B, also die Adresse der gerufenen Teilnehmerstelle, und der Teilnehmerstelle C, also die Adresse der weiteren Teilnehmerstelle, an das erste Kommunikationsnetz 1. Dies ist in der Figur 1 mit einem Pfeil 3 dargestellt. In dem ersten Kommunikationsnetz 1, insbesondere in einer Vermittlungsstelle desselben oder einem Service-Rechner oder dergleichen, werden die Adressen der Teilnehmerstellen B und C mit dem Vermerk einer erwünschten Rufweitergabe gespeichert. Dies ist in der Figur 1 mit einem Block 4 dargestellt.

Wird ein Ruf 5 von der Teilnehmerstelle A an die Teilnehmerstelle B abgegeben, so stellt das erste Kommunikationsnetz 1 aufgrund der abgespeicherten Adresse der Teilnehmerstelle B und des abgespeicherten Vermerks fest, daß bei der Teilnehmerstelle B eine Rufweitergabe erfolgen soll. Von dem ersten Kommunikationsnetz 1, insbesondere von einer Vermittlungsstelle desselben, wird dann eine neue, zusätzliche Verbindung 6 zu der entsprechend der Rufweitergabe erwünschten Teilnehmerstelle C automatisch aufgebaut. Hierzu verwendet das erste Kommunikationsnetz 1 die abgespeicherte Adresse der weiteren Teilnehmerstelle C. Die Verbindung von der rufenden Teilnehmerstelle A zu der weiteren Teilnehmerstelle C setzt sich also aus der ursprünglichen Verbindung 5 und der zusätzlichen Verbindung 6 zusammen. Ein Ruf oder eine Belegung der an sich gerufenen Teilnehmerstelle B erfolgt nicht.

Von dem ersten Kommunikationsnetz 1 kann der rufenden Teilnehmerstelle A angezeigt werden, daß eine Rufweitergabe von der Teilnehmerstelle B an die Teilnehmerstelle C erfolgt. Ebenfalls kann das erste Kommunikationsnetz 1 Informationen an das zweite Kommunikationsnetz 2 weitergeben, so daß der Teilnehmerstelle C angezeigt werden kann, daß der Ruf von der Teilnehmerstelle A kommt und an sich für die Teilnehmerstelle B ging, bei der jedoch eine Rufweitergabe eingerichtet ist.

Bei dem Verfahren der Figur 2 ist eine Rufweitergabe eines von einer rufenden Teilnehmerstelle abgegebenen Rufs an ein anderes Kommunikationsnetz möglich. Die Einrichtung der Rufweitergabe und die Abspeicherung der Adressen der Teilnehmerstellen B und C innerhalb des ersten Kommunikationsnetzes 1 erfolgt wie bei dem Verfahren der Figur 1. Aus diesem Grund entsprechen die Bezugszeichen 3 und 4 der Figur 2 auch den entsprechenden Bezugszeichen 3 und 4 der Figur 1 und der zugehörigen Beschreibung.

Wird bei der Figur 2 ein Ruf 7 von der Teilnehmerstelle A an die Teilnehmerstelle B abgegeben, so stellt das erste Kommunikationsnetz 1 aufgrund der abgespeicherten Adresse der Teilnehmerstelle B und des abgespeicherten Vermerks bzgl. der gewünschten Rufweitergabe fest, daß bei der Teilnehmerstelle B eine Rufweitergabe erfolgen soll. Von dem ersten Kommunikationsnetz 1, insbesondere von einer Vermittlungsstelle desselben, wird dann die Adresse der weiteren Teilnehmerstelle C, an die der Ruf weitergeleitet werden soll, an die rufende Teilnehmerstelle A übermittelt. Daraufhin unterbricht die Teilnehmerstelle A zuerst die bestehende Verbindung 7 und baut dann eine neue, direkte Verbindung 8 zu der Teilnehmerstelle C auf.

Von dem ersten Kommunikationsnetz 1 kann der rufenden Teilnehmerstelle A angezeigt werden, daß eine Rufweitergabe von der Teilnehmerstelle B an die Teilnehmerstelle C erfolgen soll. Die Teilnehmerstelle A kann dann ggf. entscheiden, ob eine derartige Rufweitergabe erwünscht ist. Ebenfalls kann das erste Kommunikationsnetz 1 Informationen an das zweite Kommunikationsnetz 2 weitergeben, so daß der Teilnehmerstelle C angezeigt werden kann, daß der Ruf von der Teilnehmerstelle A kommt und an sich für die Teilnehmerstelle B ging, bei der jedoch eine Rufweitergabe eingerichtet ist.

Alternativ oder zusätzlich ist es möglich, daß bei den Verfahren nach den Figuren 1 oder 2 die erwünschte Rufweitergabe durch den Benutzer nicht im Bereich des zweiten Kommunikationsnetzes 2, sondern insbesondere an seiner Teilnehmerstelle B oder an einer beliebigen Teilnehmerstelle des Kommunikationsnetzes 1 eingegeben werden kann. In diesem Fall werden dann von dort die erforderlichen Adressen an das erste Kmmunikationsnetz 1 übermittelt.

Soll bei den Verfahren der Figuren 1 und 2 die Rufweitergabe wieder zurückgenommen werden, so kann dies von dem Benutzer an jeder beliebigen Teilnehmerstelle des ersten oder zweiten Kommunikationsnetzes 1, 2 durchgeführt werden.

## Patentansprüche

1. Verfahren zur Rufweitergabe in Kommunikationsnetzen, bei dem ein Ruf von einer rufenden Teilnehmerstelle (A) an eine gerufene Teilnehmerstelle (B) abgegeben wird, und bei dem der Ruf an eine weitere Teilnehmerstelle (C) weitergegeben wird, wobei die rufende und die gerufene Teilnehmerstelle (A, B) an ein erstes Kommunikationsnetz (1) und die weitere Teilnehmerstelle (C) an ein zweites Kommunikationsnetz (2) angeschlossen sind, und wobei die Teilnehmerstellen (A, B, C) mit Adressen versehen sind, dadurch gekennzeichnet, daß die Adresse der weiteren Teilnehmerstelle (C) und die Adresse der gerufenen Teilnehmerstelle (B) an das erste Kommunikationsnetz (1) übermittelt und dort abgespeichert (4) werden.

2. Verfahren nach Anspruch 1, dadurch gekennzeichnet, daß die Adresse der weiteren Teilnehmerstelle (C) und die Adresse der gerufenen Teilnehmerstelle (B) von einer beliebigen Teilnehmerstelle des zweiten Kommunikationsnetzes (2) an das erste Kommunikationsnetz (1) übermittelt (3) und dort abgespeichert (4) werden.

3. Verfahren nach Anspruch 1 oder 2, dadurch gekennzeichnet, daß bei der Abgabe eines Rufs (5, 7) der rufenden Teilnehmerstelle (A) an die gerufene Teilnehmerstelle (B) von dem ersten Kommunikationsnetz (1) anhand der von dem zweiten Kommunikationsnetz (2) übermittelten Adresse der gerufenen Teilnehmerstelle (B) eine erwünschte Rufweitergabe erkannt wird.

4. Verfahren nach Anspruch 3, dadurch gekennzeichnet, daß von dem ersten Kommunikationsnetz (1) anhand der von dem zweiten Kommunikationsnetz (2) übermittelten Adresse der weiteren Teilnehmerstelle (C) eine Verbindung (6) der rufenden Teilnehmerstelle (A) zu der weiteren Teilnehmerstelle (C) aufgebaut wird.

5. Verfahren nach Anspruch 3, dadurch gekennzeichnet, daß bei der Abgabe eines Rufs der rufenden Teilnehmerstelle (A) an die gerufene Teilnehmerstelle (B) der rufenden Teilnehmerstelle (B) die Adresse der weiteren Teilnehmerstelle (C) mitgeteilt wird, und daß von der rufenden Teilnehmerstelle (A) eine Verbindung (8) zu der weiteren Teilnehmerstelle (C) aufgebaut wird.

6. Verfahren nach Anspruch 5, dadurch gekennzeichnet, daß der Ruf (7) der rufenden Teilnehmerstelle (A) an die gerufene Teilnehmerstelle (B) unterbrochen wird, und daß ein neuer Ruf (8) der rufenden Teilnehmerstelle (A) an die weitere Teilnehmerstelle (C) aufgebaut wird.
